Europäisches Patentamt

European Patent Office

Office européen des brevets

(11) Veröffentlichungsnummer: **0 520 303 A2**

# EUROPÄISCHE PATENTANMELDUNG

(21) Anmeldenummer: **92110181.2**

(22) Anmeldetag: **17.06.92**

(51) Int. Cl.⁵: **H02K 5/124**, H02K 5/167

(30) Priorität: **22.06.91 DE 4120656**

(43) Veröffentlichungstag der Anmeldung:
**30.12.92 Patentblatt 92/53**

(84) Benannte Vertragsstaaten:
**DE FR GB IT**

(71) Anmelder: **GRUNDFOS A/S**
**Poul Due Jensens Vej 7-11**
**DK-8850 Bjerringbro(DK)**

(72) Erfinder: **Jensen, Niels Due**
**Pilevej 11**
**DK-8850 Bjerringbro(DK)**
Erfinder: **Bach, Jens Bilgrav**
**Skovgärdsparken 10**
**DK-7080 Börkop(DK)**
Erfinder: **Nielsen, Kurt Frank**
**Gl.Vestergade 55**
**DK-5500 Middelfart(DK)**

(74) Vertreter: **Vollmann, Heiko, Dipl.-Ing. et al**
**Patentanwälte Wilcken & Wilcken,**
**Musterbahn 1**
**W-2400 Lübeck 1(DE)**

(54) **Gleitlager mit einem elastischen Mantel für einen Kreiselpumpenmotor.**

(57) Es ist ein Gleitlager (5) mit einem elastischen Mantel (7) für die Motorwelle (3) eines Naßlaufmotors (2) einer Kreiselpumpe (1) beschrieben. Der Mantel des Gleitlagers ist an wenigstens einem Ende mit einer radialen, ein Durchtrittsloch (8) für die Motorwelle (3) aufweisenden Zusatzwand (9) versehen. Die Zusatzwand (9) ist ihrerseits im Randbereich ihres Durchtrittsloches (8) als Berührungsdichtung für die Motorwelle (3) ausgebildet.

Fig. 1

Die Erfindung geht aus von einem Gleitlager mit einem elastischen Mantel für die Motorwelle eines Naßlaufmotors einer Kreiselpumpe.

In der DE-PS 908 812, der DE-OS 23 58 225 und in der EP-OS 0 204 235 sind Gleitlager beschrieben, die einen elastischen Mantel auf ihrem Außenumfang aufweisen, um Vibrationen der jeweiligen Welle gegenüber den den Lagersitz bildenden Bauteilen bzw. den übrigen Bauteilen und Bereichen der jeweiligen Maschine zu dämpfen. Des weiteren können durch den Mantel Fluchtungenauigkeiten zweier Lagersitze für eine Motorwelle ausgeglichen werden, so daß normalerweise resultierende Kantenpressungen in den Gleitlagern vermieden oder stark gemindert werden. Derartige Gleitlagerausbildungen haben sich bei Motoren kleinerer Leistung im allgemeinen bewährt. Um zu vermeiden, daß die Funktionsfähigkeit und die Lebensdauer der Gleitlager beispielsweise durch Verschmutzung und Eindringen von Fremdkörpern beeinträchtigt wird, können die Gleitlager bzw. die damit ausgerüsteten Maschinen oder Naßlaufmotoren nur mit sauberen Fluiden zwecks Schmierung betrieben werden oder es muß zusätzlich eine Dichtungskonstruktion als gesonderte Baueinheit vorgesehen sein, die in Fertigung und Platzbedarf relativ aufwendig ist.

Die Aufgabe der Erfindung besteht in der Verbesserung eines Gleitlagers der einleitend angeführten Art dahingehend, daß die Funktionsfähigkeit und die Lebensdauer des Gleitlagers mit nur geringem Kostenaufwand erhöht ist.

Die Lösung der Aufgabe ist in dem Patentanspruch 1 angegeben.

Bevorzugte Weitergestaltungen der Erfindung sind in den Unteransprüchen angeführt.

Durch die erfindungsgemäße Lösung, den Mantel an wenigstens einem Ende zur Motorwelle hin zu verlängern und am radial inneren Ende der Verlängerung als Berührungsdichtung auszubilden, wird das Eindringen von Schmutz und Fremdkörpern in das Gleitlager auf eine sehr einfache und platzsparende Weise vermieden, so daß die Funktionsfähigkeit und die Lebensdauer des Gleitlagers mit einfachen Mitteln und nur geringem zusätzlichen Kostenaufwand erreicht ist. Ein besonderes Einsatzgebiet für das erfindungsgemäße Gleitlager, dessen Lagerwerkstoff hauptsächlich aus Keramikmaterial besteht, sind Motorwellen für Naßlaufmotoren von Kreiselpumpen. Die Durchmesser der Motorwellen liegen im allgemeinen im Bereich von 6 bis 20 mm, und derartige Motorwellen werden für Motoren verwendet, die Pumpen beispielsweise in Heizungsanlagen, in Brauchwasseranlagen, in Springbrunnenanlagen und in Entwässerungsanlagen antreiben. Derartige Pumpen sind in außerordentlich großer Anzahl im Einsatz, so daß dauerhafte Funktionsfähigkeit und Lebensdauer ihrer Lager ein sehr wichtiges Kriterium für den Betrieb dieser Pumpen sind.

In bevorzugter Weitergestaltung des Mantels mit innenseitigen Nuten ist der Vorteil gegeben, daß das Gleitlager auch an seiner der Zusatzwand zugekehrten Seite mit Wasser aus dem Rotorraum geschmiert wird. Ferner wird bei zusätzlicher Ausbildung der Zusatzwand als Membran erreicht, daß die Dichtungswirkung der Zusatzwand entlastet bzw. verbessert ist, so daß der Flüssigkeitsaustausch aus dem Rotorraum des Motors zum Pumpenraum noch sicherer vermieden ist. Dies ist sehr wichtig bei Springbrunnenpumpen, die bekanntlich besonders häufig ein- und ausgeschaltet werden.

Die Erfindung ist nachstehend anhand mehrerer, in der anliegenden Zeichnung dargestellter Ausführungsbeispiele näher erläutert. Es zeigen:

Figur 1      ein Motorpumpenaggregat als Springbrunnenpumpe im Axialschnitt,
Figur 2      die Einzelheit A in Figur 1 in vergrößertem Maßstab und modifiziert,
Fig.3 u.4    weitere Ausführungsbeispiele in einer Darstellung gem. Figur 2.

Das gezeigte Motorpumpenaggregat als Springbrunnenpumpe besteht aus einer Kreiselpumpe 1 und aus einem elektrischen Naßlaufmotor 2 für deren Antrieb.

Die Welle 3 des Motors 2, auf der das Pumpenlaufrad 4 befestigt ist, ist in zwei Gleitlagern 5 und 6 gelagert, die aus sprödem Material bestehen, z.B. aus Keramikmaterial. Die beiden Gleitlager 5 und 6 sind je mit einem Mantel 7 versehen, der aus einem elastischen Material besteht, z.B. aus einem elastomeren Kunststoff oder aus Gummi.

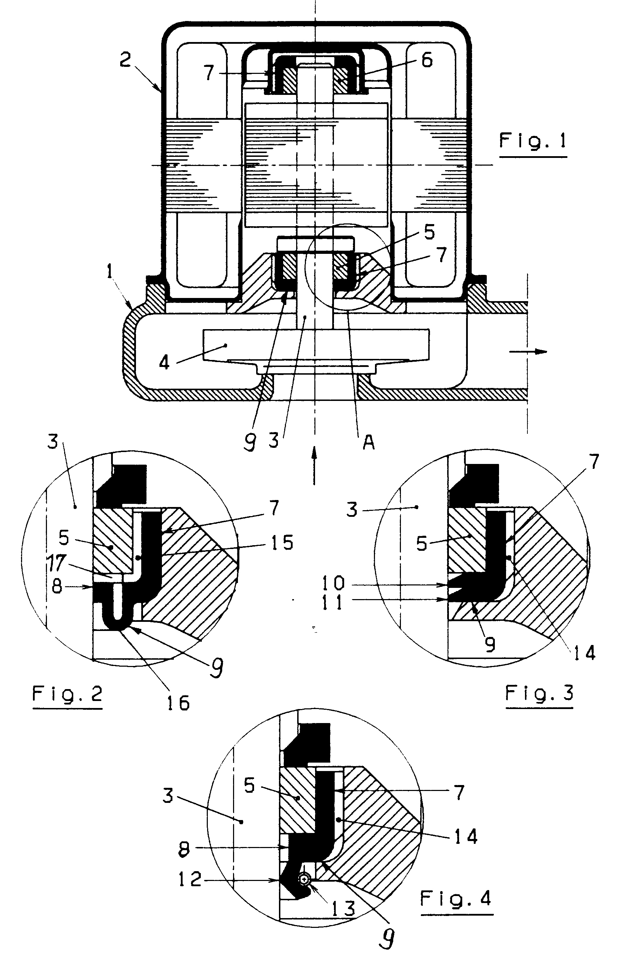

Wie es am besten aus Figur 2 zu erkennen ist, ist der Mantel 7 des Gleitlagers 5 an wenigstens einem Ende als radiale, ein Durchtrittsloch 8 für die Motorwelle 3 aufweisende Zusatzwand 9 weitergeführt. Diese Zusatzwand 9 ist in ihrem Randbereich, der dem Durchtrittsloch 8 zugekehrt ist, als Berührungsdichtung für die Motorwelle 3 ausgebildet. Der entsprechende Randbereich der Zusatzwand liegt also an der Welle 3 an und dichtet diese mit ihrer stirnseitigen Anlagefläche ab. In Figur 2 ist die Berührungsdichtung so gezeigt, daß praktisch die gesamte Wanddicke als Dichtungsfläche arbeitet.

Die Figuren 3 und 4 zeigen abgewandelte Formen der Berührungsdichtung, und zwar als sogenannte Lippendichtungen. In Figur 3 ist eine mehrfache Lippendichtung gezeigt, die zum Beispiel aus zwei Lippen 10 und 11 der Zusatzwand 9 besteht. In Figur 4 ist eine einfache Lippendichtung gezeigt, die an einem ringförmigen, sich axial erstreckenden und im Querschnitt V-förmigen Fortsatz 12 vorgesehen ist. In der rückseitigen Vertiefung des Lippenfortsatzes befindet sich eine Ringspannfeder 13, um der Dichtlippe des Fortsatzes 12 eine gewisse Vorspannung zu geben. Die Ringspannfeder kann zum Beispiel eine Wendelfeder sein.

In weiterer Abwandlung kann eine Vorspannung der Dichtfläche der Zusatzwand 9 auch dadurch erzielt werden, daß ein ringförmiges Federelement mit in die Zusatzwand 9 eingegossen bzw. eingearbeitet ist oder die Zusatzwand selbst die immanente Vorspannkraft aufweist.

In Weitergestaltung des elastischen Mantels 7 kann dieser auf seinem Außen- und/oder Innenumfang mit mehreren axialen Nuten 14 bzw. 15 versehen sein. Die Nuten dienen als Strömungskanäle für die Zuleitung des zu Schmierungszwecken verwendeten reinen Rotorfluids zu den Lagern. Die Nuten haben noch den weiteren Vorteil, daß sie eine verbesserte radiale Dämpfung für das Gleitlager 5 bewirken, insbesondere dann, wenn die Materialen für die Herstellung des Mantels 7 aus relativ hartfederndem Material bestehen.

Bei der in Figur 1 dargestellten Springbrunnenpumpe ist die Motorwelle 3 nicht durch den Mantel 7 des oberen Gleitlagers 6 abgedichtet. Bei Heizungs- und Brauchwasserpumpen (nicht gezeigt) kann die Welle im Bereich dieses Lagers 6 nach oben verlängert ausgebildet sein. Die erfindungsgemäße Zusatzwand 9 des Mantels würde dann die Welle 3 abdichten. Das Motorgehäuse wurde in diesem Bereich einen bekannten Stopfen aufweisen, so daß bei dessen Entfernung eine Kontrolle der Motordrehrichtung und eine eventuelle Deblockierung des Motorrotors möglich ist, ohne daß die Gefahr eines Wasserverlustes aus dem Rotorraum des Pumpenmotors besteht.

Die Zusatzwand 9 des Mantels 7 kann in einer weiteren Ausführung zusätzlich als Membran ausgebildet sein, so daß die Wand 9 in axialer Richtung nachgiebig ist, wodurch die Abdichtungswirkung der Zusatzwand weiter verbessert ist. Bei Pumpen mit relativ häufigem Ein- und Ausschaltbetrieb, wie dies bei Springbrunnen- und Entwässerungspumpen der Fall ist, ist dies besonders vorteilhaft.

Hier kommt es besonders darauf an, daß ein Flüssigkeitsaustausch zwischen dem Rotorraum des Motors und dem Pumpenraum sicher vermieden wird.

Die Membranwirkung kann dadurch gegeben sein, daß die Zusatzwand 9 einen sich umfangsmäßig erstreckenden Mittelabschnitt 16 aufweist, dessen Querschnitt z.B. durch Schwächung und/oder formmäßige Gestaltung axial nachgiebig ausgebildet ist. Eine Möglichkeit der Formgestaltung besteht darin, daß der Mittelabschnitt 16 im Querschnitt U-förmig ausgestaltet ist, wie es in Figur 2 beispielsweise gezeigt ist.

**Patentansprüche**

1. Gleitlager, das unmittelbar von einem elastischen Mantel umgeben ist, für die Motorwelle eines Naßlaufmotors einer Kreiselpumpe, dadurch gekennzeichnet, daß der Mantel (7) des Gleitlagers (5) an wenigstens einem Ende mit einer radialen, ein Durchtrittsloch (8) für die Motorwelle (3) aufweisenden Zusatzwand (9) versehen ist und daß die Zusatzwand im Randbereich ihres Durchtrittsloches (8) als Berührungsdichtung für die Motorwelle (3) ausgebildet ist.

2. Gleitlager nach Anspruch 1, dadurch gekennzeichnet, daß die Berührungsdichtung als ein- oder mehrfache Lippendichtung (10,11) ausgebildet ist.

3. Gleitlager nach Anspruch 1, dadurch gekennzeichnet, daß die Berührungsdichtung als vorgespannte Dichtung (12,13) ausgebildet ist.

4. Gleitlager nach Anspruch 3, dadurch gekennzeichnet, daß die Zusatzwand (9) an ihrem radial inneren Ende einen ringförmigen, sich axial erstreckenden, im Querschnitt V-förmigen Dichtungsfortsatz (12) aufweist, in dessen rückseitiger Vertiefung sich eine Ringspannfeder (13) befindet.

5. Gleitlager nach Anspruch 1, dadurch gekennzeichnet, daß der elastische Mantel (7) auf seinem Außen- und/oder Innenumfang mit einer Mehrzahl von axialen Nuten (14,15) versehen ist.

6. Gleitlager nach Anspruch 5, dadurch gekennzeichnet, daß die Zusatzwand (9) auf ihrer Innenseite radiale Nuten (17) aufweist.

7. Gleitlager nach Anspruch 1, dadurch gekennzeichnet, daß die radiale Zusatzwand (9) des Mantels (7) als Membran ausgebildet ist.

8. Gleitlager nach Anspruch 7, dadurch gekennzeichnet, daß die membranfähige Zusatzwand (9) einen umfangsmäßigen, axial nachgiebig ausgebildeten Mittelabschnitt (16) aufweist, z.B. durch dessen querschnittsmäßige Schwächung und/oder Formgestaltung.

9. Gleitlager nach Anspruch 8, dadurch gekennzeichnet, daß der Mittelabschnitt (16) der Zusatzwand (9) im Querschnitt U-förmig gestaltet ist.

Fig. 1

Fig. 2

Fig. 3

Fig. 4